# EUROPEAN PATENT APPLICATION

(11) **EP 4 079 589 A1**
(43) Date of publication of application: **26.10.2022**
(21) Application number: 21170260.0
(22) Date of filing: 23.04.2021
(51) Int. Cl.: B60T 13/74, F16D 65/14

(54) **BRAKE ACTUATOR**

(71) Applicant: KNORR-BREMSE Systeme für Nutzfahrzeuge GmbH, 80809 München (DE)
(72) Inventor: HOLLOSI, Mate, 1097 Budappest (HU); KLINGNER, Matthias, 82275 Emmering (DE); BLESSING, Michael, 80687 München (DE); PESCHEL, Michael, 82296 Schöngeising (DE); GYÖRKE, Zsombor, 8360 Keszthely (HU); MLINARCSEK, Csaba, 1165 Budapest (HU); SCHALLER, Sebastian, 86462 Langwied (DE); STANKOVIC, Dordo, 81929 München (DE); SZABO, Janos, 1042 Budapest (HU); KOKREHEL, Csaba, 1119 Budapest (HU); HÖS, Levente, 1047 Budapest (HU); MONORI, Gyula, 6065 Lakitelek (HU); KRÜGER, Sven Philip, 81476 München (DE); SCHÖFBERGER, Tobias, 84048 Mainburg (DE)
(74) Representative: Prüfer & Partner mbB Patentanwälte · Rechtsanwälte

(57) **Abstract**

A brake actuator is disclosed comprising:
- a transfer element (5) configured to be moved along an actuating direction (1) and to actuate a brake (2) by moving into at least one actuating position (AP);
- an actuating mechanism (6) configured to move the transfer element (5) into the at least one actuating position (AP) to actuate the brake (2), wherein the actuating mechanism (6) is configured to be movable along the actuating direction (1);
- a distancing mechanism (4) configured to move the actuating mechanism (6) from a non-operating position (NOP) into an operating position (OP) along the actuating direction (1), wherein
the transfer element (5) and the actuating mechanism (6) are configured in such way that the transfer element (5) is located in the actuating position (AP) when the actuating mechanism (6) is located in the non-operating position (NOP).

Further, a brake system, a vehicle and a method for operating a brake actuator are disclosed.

## Description

The present invention relates to a brake actuator, a brake system, a vehicle and a method for operating a brake actuator.

Brake actuators for actuating a brake for providing a brake force during a driving operation and during a non-driving operation are known. Usually, for both operations two different actuators are provided. Such brake actuators are arranged near the axle or wheel to be decelerated or secured. However, the installation space near the axle or wheel is limited.

As there is little space near the wheel or near the brake, it is a task of the present invention to provide a small, space-saving brake actuator for both operations.

This task is solved by the subject-matters of the independent claims. Advantageous embodiments are the subject-matter of the dependent claims.

According to the invention, a brake actuator is provided, comprising:
- a transfer element configured to be moved along an actuating direction and to actuate a brake by moving into at least one actuating position;
- an actuating mechanism configured to move the transfer element into the at least one actuating position to actuate the brake, wherein the actuating mechanism is configured to be movable along the actuating direction;
- a distancing mechanism configured to move the actuating mechanism from a non-operating position into an operating position along the actuating direction, wherein
the transfer element and the actuating mechanism are configured in such way that the transfer element is located in the actuating position when the actuating mechanism is located in the non-operating position.

Preferably, the transfer element comprises a rod, wherein further preferably, the axis of the rod is oriented in parallel to the actuating direction.

The actuation of the brake is meant to be an operation of the brake, wherein a braking force or torque is generated by the actuated brake. The braking force or torque can be applied to a vehicle during a driving operation to adjust the speed of the vehicle and/or during a non-driving operation of the vehicle, to keep the vehicle at rest. For example, the brake actuator can apply a force into the brake due to the transfer element being located in the actuating position. In particular, the transfer element can apply an actuation force on brake pads of the brake which causes them to frictionally engage with a brake disc of the brake to generate a brake torque, accordingly.

The brake itself is preferably configured as a frictional brake, and can comprise in particular a disc brake or a drum brake.

Preferably, the actuating direction is a straight line, a curved line or it comprises portions formed as a straight line and portions formed as a curved line.

According to one aspect of the invention, the transfer element, the actuating mechanism and the distancing mechanism are configured in such way, that when the actuating mechanism is located in the operating position the transfer element has to be actively moved by the actuating mechanism into the at least one actuating position since there is a clearance between the transfer element and the actuating position. When the actuating mechanism is located in the non-operating position, the transfer element is simultaneously located in the actuating position wherein the clearance is closed and in particular, the brake is actuated.

Preferably, the transfer element and the actuating mechanism are configured to be movable as one block along and/or against the actuation direction. For example, the transfer element abuts at an end stop against the actuating direction and therefore, the actuating mechanism is moveable together with the transfer element against the actuating direction as one block.

Preferably, the distancing mechanism is configured to hold the actuating mechanism in the operating position. Alternatively or additionally, the distancing mechanism is configured to move the actuating mechanism into the operating position. For example, a pressurized chamber of the distancing mechanism generates a corresponding force to hold or move the actuating mechanism in or into the operating position.

Preferably, the brake actuator, in particular the distancing mechanism, is configured to move the actuating mechanism into at least one second non-operating position to keep the brake actuated, preferably to adjust the brake actuation, that a minimum braking force or torque threshold is met or held. Preferably, the moving of the actuating mechanism into the at least one second non-operating position causes the transfer element to move into at least one second actuating position, wherein the brake is kept actuated. In particular, in a non-driving operation of the vehicle, wherein the brake is actuated by the transfer element acting on the brake in the actuating position, the brake can cool off and a clearance in the brake can arise, wherein the brake force or torque generated by the brake to keep the vehicle at rest is reduced. To avoid this situation, the actuating mechanism is moved along the actuating direction into a second non-operating position and therefore causing the transfer element to move along the actuating direction to increase the actuating of the brake.

Preferably, the actuating mechanism is configured to move the transfer element when the actuating mechanism is actuated.

Alternatively or additionally, the actuating mechanism is configured to be actuated pneumatically, hydraulically, electro-mechanically and/or a mechanically.

Preferably, the distancing mechanism is configured to move the actuating mechanism into the operating position and/or to hold the actuating mechanism in the operating position when the distancing mechanism is actuated.

Alternatively or additionally the distancing mechanism is configured to be actuated pneumatically, hydraulically, electro-mechanically and/or a mechanically.

Preferably, the actuating mechanism and/or of the distancing mechanism can be actuated by fluid, in particular pneumatically or hydraulically, via a combination of a pressure chamber and a membrane or a piston, wherein the pressure acting in the pressurized pressure chamber on the membrane or on the piston, generates an actuation force directly or via intermediate members. An electro-mechanically actuation is preferably caused by an electric motor generating the actuation force.

Preferably, the actuating mechanism is configured to move into the non-operating position when it is not held in the operating position by the distancing mechanism or when it is not moved into the operating position by the distancing mechanism. Preferably, the brake actuator is configured to return the actuating mechanism into the non-operating position or to hold the actuating mechanism in the non-operating position when the distancing mechanism is not acting on the actuating mechanism. For example, a reset element, in particular comprising a spring, is provided acting on the actuating mechanism for returning or holding the actuating mechanism into or in the non-operating position.

Preferably, the distancing mechanism comprises a pressure chamber with a movable face, configured to be moved in reaction to a pressure in the pressure chamber exceeding a predetermined threshold, and wherein the actuating mechanism is moved into the operating position in reaction to the movement of the face, wherein preferably, the face is connected to the actuating mechanism or is a face of the actuating mechanism.

Preferably, the brake actuator, in particular the distancing mechanism, comprises an electromagnetic mechanism configured to move the actuating mechanism into the operating position or to hold the actuating mechanism in the operating position when the electromagnetic mechanism is activated.

Preferably, the brake actuator, in particular the distancing mechanism, is configured to hold the actuating mechanism in the operating position frictionally and/or by form fitting. Preferably, a locking element is provided on the right side of the actuating mechanism configured to lock or hold the actuating mechanism in the operating position. Preferably, at least one element, in particular every element, is arranged coaxially to the actuating mechanism to avoid tilting or configured to apply the corresponding force in such way that the actuating mechanism does not tilt.

Preferably, at least one element, in particular every element, is arranged coaxially to the transfer element to avoid tilting or configured to apply the corresponding force in such way that the actuating mechanism does not tilt.

According to a further aspect of the invention, a brake system for a vehicle, in particular a commercial vehicle, is provided. The brake system comprising:
- at least one brake configured to be activated by a movement of a transfer element into an actuating position, and
- at least one brake actuator as described above, wherein
the transfer element of the at least one brake actuator is configured to activate the at least one brake.

According to a further aspect of the invention, a vehicle is provided, comprising:
- at least one brake actuator as described above, and/or
- a brake system as described above.

Preferably, the vehicle is configured as a commercial vehicle, a truck, a trailer, a passenger car, and/or a combination of a towing vehicle and a trailer.

Alternatively or additionally, the vehicle is configured as an electric, hybrid or conventional vehicle. As an electric or hybrid vehicle, the vehicle can comprise a fuel cell and/or a traction battery for supplying power to at least one electric traction machine of the vehicle.

According to a further aspect of the invention, a method is provided for operating a brake actuator, in particular a brake actuator as described above, comprising the steps:
- step S1: moving an actuating mechanism configured to move a transfer element into an operating position such that the transfer element is not located in the actuating position;
- step S2: moving the transfer element into the actuating position to actuate at least one brake, in particular, via operating the actuating mechanism;
- step S3: moving the actuating mechanism into a non-operating position, whereby the transfer element is located in the actuating position to actuate the at least one brake when the actuating mechanism is located in the non-operating position.

These steps do not have to be executed in this order. Instead, any order of the steps S1 to S3 is possible. In addition, steps can be omitted.

Preferably, the method is executed using a brake actuator as described above, a brake system as described above or a vehicle as described above.

Alternatively or additionally, the steps S1 and/or S2 are/is executed during a driving operation of the vehicle. By executing these steps the speed of the vehicle can be adjusted by the actuated brake.

Alternatively or additionally the step S3 is executed during a non-driving operation of the vehicle. Therefore, the standing vehicle can be secured so that it cannot move out of its position.

In the following, some advantageous aspects of the invention are described by referencing to the drawings.

### In particular:

- Fig. 1: shows a general embodiment of the invention;
- Fig. 2: shows the brake actuator with a first embodiment of the distancing mechanism;
- Fig. 3: shows the brake actuator with a second embodiment of the distancing mechanism;
- Fig. 4: shows the brake actuator with a third embodiment of the distancing mechanism;
- Fig. 5: shows the general embodiment according to Fig. 1, comprising a reset element; and
- Fig. 6: shows the general embodiment according to Fig. 1, comprising a locking element.

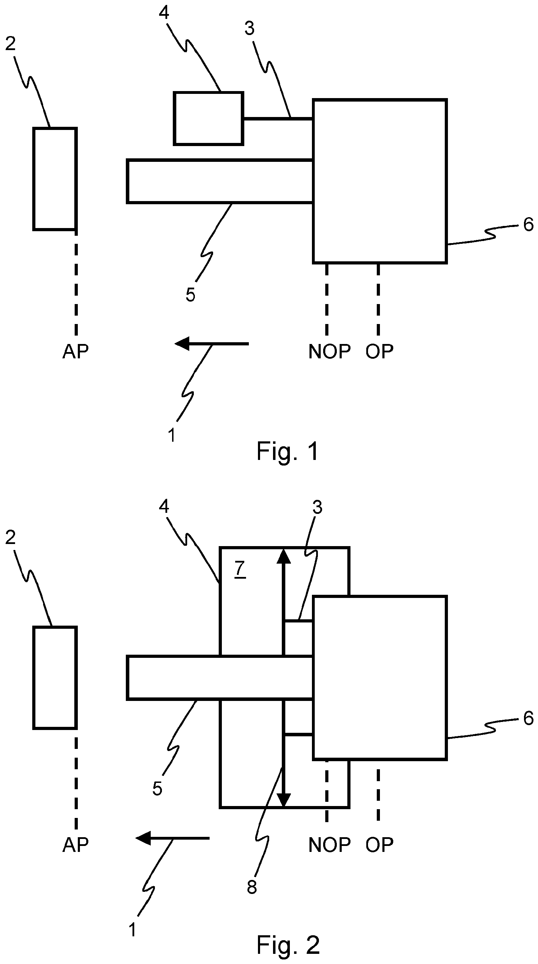

**Fig.** 1 shows a general embodiment of a brake actuator according to the invention.

An actuating direction 1 is shown leading from the right to the left in the drawing. Along the actuating direction 1 there are marked-up three positions (beginning with the most right position): an operating position OP, a non-operating position NOP and an actuating position AP.

A brake 2 is shown represented by a block to keep the drawing simple. The brake 2 can comprise a disc or a drum brake and generally be configured to work as a friction brake.

A transfer element 5 is shown which is movable along the actuating direction 1. The transfer element 5 comprises a rod extending from the right to the left wherein its axis is oriented in parallel to the actuating direction 1.

The brake 2 and the transfer element 5 are configured such that when the left end of the rod of the transfer element 5 is in the actuating position AP, the brake 2 is actuated by the transfer element 5. That means, as described above, a brake force or torque is generated by the brake 2.

The transfer element 5 is in contact or part of an actuating mechanism 6. The actuating mechanism 6 is configured to move the transfer element 5 into the actuating position AP. The actuating mechanism 6 itself is configured to be moved between the operating position OP and the non-operating position NOP. The transfer element 5 can be moved by the actuating mechanism 6 by applying a force on the transfer element 5 pneumatically, hydraulically, electro-mechanically and/or a mechanically.

Further, a distancing mechanism 4 is shown which is in contact with the actuating mechanism 6 via a connection 3. The connection 3 can comprise a rod, in particular a push rod, to apply a force from the distancing mechanism 4 to the actuating mechanism 6, to move the actuating mechanism 6 into the operating position OP. For applying the force to the actuating mechanism 6, which means an actuating of the distancing mechanism 4, the distancing mechanism 4 can generate the force pneumatically, hydraulically, electro-mechanically and/or a mechanically.

The brake actuator according to Fig. 1 works as follows.

In the state of the brake actuator shown in Fig. 1, the actuating mechanism 6 is located in the operating position OP, wherein the transfer element 5, in particular the left end of the rod, is not located in the actuating position AP.

The actuating mechanism 6 can be held actively in the operating position OP by the distancing mechanism 4, for example by applying a permanent force against the actuating direction 1 onto the actuating mechanism 6. Alternatively, the actuating mechanism 6 can be locked in the operating position OP for example by engagement of a form fitting locking mechanism (not shown).

The state shown in Fig. 1 can be taken during a driving operation, wherein a vehicle comprising the brake actuator and the brake 2 is moving. For actuating the brake 2, the transfer element 5 is moved to the left so that the left end of the rod is in the actuating position AP. Thereby the brake 2 generates a braking force or torque to adjust the speed of the vehicle.

A state wherein the actuating mechanism 6 is located in the non-operating position NOP is preferably taken during a non-driving operation when the vehicle is at rest. The brake actuator can be configured to move the actuating mechanism 6 into the non-operating position NOP automatically as soon as the distancing mechanism 4 is not activated anymore and therefore not applying a force onto the actuating mechanism 6. Alternatively, the distancing mechanism 4 can be configured to move the actuating mechanism 6 actively into the non-operating position NOP.

By moving the actuating mechanism 6 into the non-operating position NOP, the transfer element 5 is moved into the actuating direction AP, wherein the actuating mechanism 6 and the transfer element 5 act as one block.

Therefore, when the actuating mechanism 6 is located in the non-operating position NOP, the brake 2 is automatically actuated by the transfer element 5, because the left end of the rod is located in the actuating position AP.

In this state, the brake 2 can be actuated permanently, in particular, when there is no energy to spend to keep the actuating mechanism 6 in the non-operating position NOP. Thereby, a permanent brake force or torque can be applied to the vehicle which can be used to keep the vehicle at rest during a non-driving operation.

Preferably, the distancing mechanism 4 is arranged coaxially to the actuating mechanism 6 to avoid tilting of the actuating mechanism 4 when applying the force onto the actuating mechanism 4.

Fig. 2 shows the brake actuator with a first embodiment of the distancing mechanism.

As the embodiment is similar to the general embodiment according to Fig. 1, only the differences to Fig. 1 are described. Otherwise, reference is made to the description of Fig. 1.

The distancing mechanism 4 comprises a housing forming a pressure chamber 7 with a piston acting as the connection 3, wherein the right limitation of the pressure chamber 7 is formed by the left face 8 of the piston which is slidingly guided in the housing in parallel to the actuating direction 1.

The face 8 and the connection 3 are arranged coaxially to the actuating mechanism 6 to avoid tilting when a force is applied onto the actuating mechanism 6.

The brake actuator works as follows:
When the pressure chamber 7 is pressurized by a fluid, for example pneumatically or hydraulically, the pressure acts on the face 8 and, therefore, via the connection 3 a force is applied on the actuating mechanism 6 causing the actuating mechanism 6 to move into the operating position OP or to be held in the operating position OP.

Therefore, pressurizing the pressure chamber 7 leads to the state of the brake actuator as shown in the drawing.

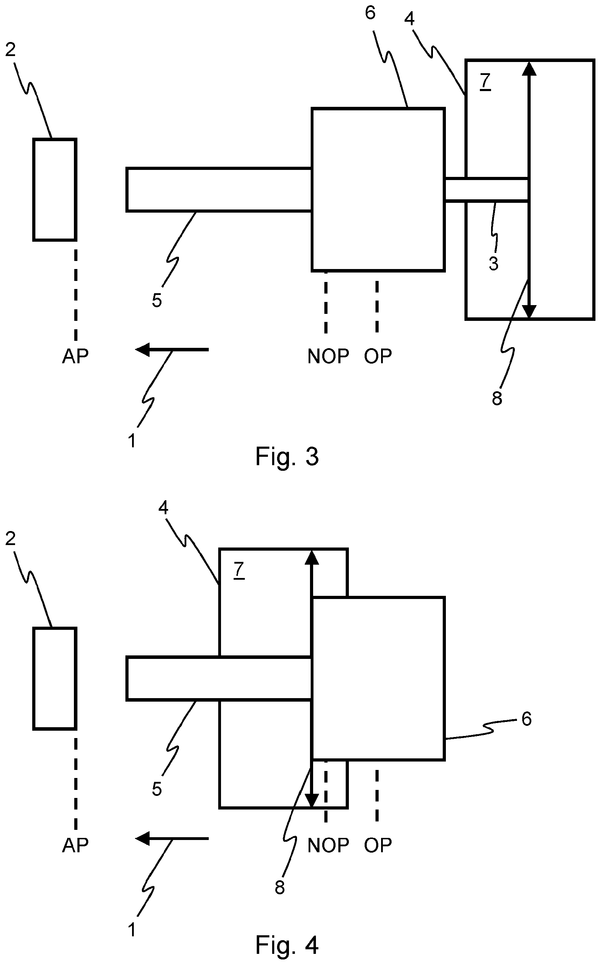

Fig. 3 shows the brake actuator with a second embodiment of the distancing mechanism.

As the embodiment is similar to the embodiment according to Fig. 2, only the differences to Fig. 2 are described. Otherwise, reference is made to the description of Fig. 1 and Fig. 2.

In this embodiment, the distancing mechanism 4 is arranged to the right of the actuating mechanism 6. The distancing mechanism 4 comprises a pressure chamber 7 formed by a housing and a piston acting as a connection 3, wherein the piston is slidingly guided in the housing in parallel to the actuating direction 1.

As described according to Fig. 2, the actuating mechanism 6 is moved or held in the operating position OP by pressurizing the pressure chamber 7.

The working of the brake actuator is similar to the working of the brake actuator according to Fig. 2.

Fig. 4 shows the brake actuator with a third embodiment of the distancing mechanism.

As the embodiment is similar to the embodiment according to Fig. 2, only the differences to Fig. 2 are described. Otherwise, reference is made to the description of Fig. 1 and Fig. 2.

In this embodiment, the face 8 is formed directly on the actuating mechanism 6 respectively as a face of the actuating mechanism 6. Therefore, the actuating mechanism 6 itself acts as the piston and no connection 3 as shown in Fig. 2 is needed.

This embodiment allows a reduction of extension of the brake actuator in the actuating direction 1.

As described according to Fig. 2, the actuating mechanism 6 is moved or held in the operating position OP by pressurizing the pressure chamber 7.

The working of the brake actuator is similar to the working of the brake actuator according to Fig. 2.

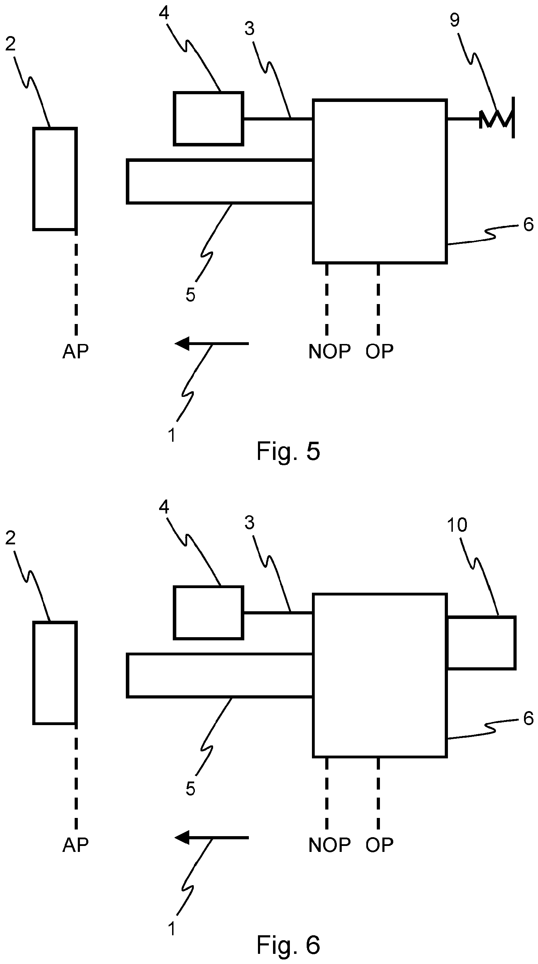

**Fig.** 5 shows the general embodiment according to Fig. 1, comprising a reset element.

As the embodiment is similar to the general embodiment according to Fig. 1, only the differences are described. Otherwise, reference is made to the description of Fig. 1.

This embodiment can be combined with every embodiment described in this application, in particular with the embodiments according to Fig. 2, Fig. 3 and Fig. 4.

Here, a reset element 9 is provided on the right side of the actuating mechanism 6 configured to generate a reset force to the actuating mechanism 6 in the actuating direction 1 to remove the actuating mechanism 6 into the non-operating position NOP when the distancing mechanism 4 is not activated or not applying a force onto the actuating mechanism 6 against the actuating direction 1.

The reset element 9 can comprise a spring or can be configured as a spring. In the combination with one of the embodiments according to the Figs. 2 to 4 or in general, wherein the distancing actuator 4 is actuated by a fluid, in particular pneumatically or hydraulically, a spring-loaded actuator is formed by the reset element 9 and the distancing actuator 4, leading to an automatic reset of the actuating mechanism 6 into the non-operating position NOP when the distancing actuator 4 is de-pressurized.

The spring of the reset element 9 is preferably arranged coaxially to the actuating mechanism 6 and/or to the transfer element 5 to avoid tilting.

**Fig.** 6 shows the general embodiment according to Fig. 1, comprising a locking element.

As the embodiment is similar to the general embodiment according to Fig. 1, only the differences are described. Otherwise, reference is made to the description of Fig. 1.

This embodiment can be combined with every embodiment described in this application, in particular with the embodiments according to Figs. 2 to 5.

A locking element 10 is provided on the right side of the actuating mechanism 6 configured to lock or hold the actuating mechanism 6 in the operating position OP.

The locking can be realized by frictional or form fitting engagement of the actuating mechanism 6 with the locking element 10.

Additionally or alternatively, the locking is achieved by an electromagnetic mechanism comprised by the locking element 10, wherein an electromagnet of the locking element 10 locks the actuating mechanism 6 by generating a magnetic locking force. In particular, this embodiment is capable for an electro-mechanic braking system.

If the locking element 10 releases the actuating mechanism 6 and a reset element 9 according to Fig. 5 is provided, the actuating mechanism 6 is removed automatically into the non-operating position.

### LIST OF REFERENCE SIGNS

- 1: actuating direction
- 2: brake
- 3: connection
- 4: distancing mechanism
- 5: transfer element
- 6: actuating mechanism
- 7: pressure chamber
- 8: face
- 9: reset element
- 10: locking element
- AP: actuating position
- NOP: non-operating position
- OP: operating position

## Claims

1. Brake actuator comprising:
- a transfer element (5) configured to be moved along an actuating direction (1) and to actuate a brake (2) by moving into at least one actuating position (AP);
- an actuating mechanism (6) configured to move the transfer element (5) into the at least one actuating position (AP) to actuate the brake (2), wherein the actuating mechanism (6) is configured to be movable along the actuating direction (1);
- a distancing mechanism (4) configured to move the actuating mechanism (6) from a non-operating position (NOP) into an operating position (OP) along the actuating direction (1), wherein
the transfer element (5) and the actuating mechanism (6) are configured in such way that the transfer element (5) is located in the actuating position (AP) when the actuating mechanism (6) is located in the non-operating position (NOP).

2. Brake actuator according to claim 1, wherein
the transfer element (5) and the actuating mechanism (6) are configured to be movable as one block along the actuation direction (1).

3. Brake actuator according to claim 1 or 2, wherein
the distancing mechanism (4) is configured to hold the actuating mechanism (6) in the operating position (OP), and/or wherein
the distancing mechanism (4) is configured to move the actuating mechanism (6) into the operating position (OP).

4. Brake actuator according to one of the preceding claims, wherein
the brake actuator, in particular the distancing mechanism (4), is configured to move the actuating mechanism into at least one second non-operating position to keep the brake (2) actuated, preferably to adjust the brake actuation, that a minimum braking force or torque threshold is met or held.

5. Brake actuator according to one of the preceding claims, wherein
the actuating mechanism (6) is configured to move the transfer element (5) when the actuating mechanism (6) is actuated, and/or wherein
the actuating mechanism (6) is configured to be actuated pneumatically, hydraulically, electro-mechanically and/or a mechanically.

6. Brake actuator according to one of the preceding claims, wherein
the distancing mechanism (4) is configured to move the actuating mechanism (6) into the operating position (OP) and/or to hold the actuating mechanism (6) in the operating position (OP) when the distancing mechanism (4) is actuated, and/or wherein
the distancing mechanism (4) is configured to be actuated pneumatically, hydraulically, electro-mechanically and/or a mechanically.

7. Brake actuator according to one of the preceding claims, wherein
the actuating mechanism (6) is configured to move into the non-operating position (NOP) when it is not held in the operating position (OP) by the distancing mechanism (4) or when it is not moved into the operating position (OP) by the distancing mechanism (4).

8. Brake actuator according to one of the preceding claims, wherein
the distancing mechanism (4) comprises a pressure chamber (7) with a movable face (8), configured to be moved in reaction to a pressure in the pressure chamber (7) exceeding a predetermined threshold, and wherein the actuating mechanism (6) is moved into the operating position (OP) in reaction to the movement of the face (8), wherein preferably, the face (8) is connected to the actuating mechanism (6) or is a face of the actuating mechanism (6).

9. Brake actuator according to one of the preceding claims, wherein
the distancing mechanism (4) comprises an electromagnetic mechanism configured to move the actuating mechanism (6) into the operating position (OP) or to hold the actuating mechanism (6) in the operating position (OP) when the electromagnetic mechanism is activated.

10. Brake actuator according to one of the preceding claims, wherein
the brake actuator, in particular the distancing mechanism (4), is configured to hold the actuating mechanism (6) in the operating position (OP) frictionally and/or by form fitting.

11. Brake actuator according to one of the preceding claims, wherein
the brake actuator is configured to return the actuating mechanism (6) into the non-operating position (NOP) or to hold the actuating mechanism (6) in the non-operating position (NOP) when the distancing mechanism (4) is not acting on the actuating mechanism (6).

12. Brake system for a vehicle, in particular a commercial vehicle, comprising:
- at least one brake (2) configured to be activated by a movement of a transfer element (5) into an actuating position (AP), and
- at least one brake actuator according to any of the claims 1 to 11, wherein
the transfer element (5) of the at least one brake actuator is configured to activate the at least one brake (2).

13. Vehicle comprising:
- at least one brake actuator according to any of the claims 1 to 11, and/or
- a brake system according to claim 12, wherein
the vehicle is preferably configured as a commercial vehicle, a truck, a trailer, a passenger car, and/or a combination of a towing vehicle and a trailer, and/or wherein
the vehicle is preferably configured as an electric, hybrid or conventional vehicle.

14. Method for operating a brake actuator, in particular a brake actuator according to one of the claims 1 to 11, comprising the steps:
- step (S1): moving an actuating mechanism (6) configured to move a transfer element (5) into an operating positing (OP) such that the transfer element (5) is not located in the actuating position (AP);
- step (S2): moving the transfer element (5) into the actuating position (AP) to actuate at least one brake, in particular, via operating the actuating mechanism (6);
- step (S3): moving the actuating mechanism (6) into a non-operating position (NOP), whereby the transfer element (5) is located in the actuating position (AP) to actuate the at least one brake when the actuating mechanism (6) is located in the non-operating position.

15. Method according to claim 14, wherein
the method is executed using a brake actuator according to one of the claims 1 to 11, a brake system according to claim 12 or a vehicle according to claim 13, and/or wherein
the steps (S1) and/or (S2) are/is executed during a driving operation of the vehicle, and/or wherein
the step (S3) is executed during a non-driving operation of the vehicle.
